# NEW EUROPEAN PATENT SPECIFICATION

(11) **EP 0 182 674 B2**
(45) Date of publication and mention of the opposition decision: **10.09.1997**
(45) Mention of the grant of the patent: 22.09.1993
(21) Application number: 85308514.0
(22) Date of filing: 22.11.1985
(51) Int. Cl.: C09K 3/10

(54) **Sealing of containers**
Abdichtung von Behältern
Etanchéification de récipients

(30) Priority: 23.11.1984 GB 8429711
(43) Date of publication of application: 28.05.1986
(73) Proprietor: W.R. Grace & Co.-Conn., New York, New York 10036 (US)
(72) Inventor: Blakeman, Peter John, Bedford MK41 7AA (GB); Sinnott, Kenneth Martin, Huntingdon Cambridgeshire (GB)
(74) Representative: Lawrence, Peter Robin Broughton

(56) References cited:
- FR-A- 2 306 246
- GB-A- 2 084 600
- GB-A- 2 084 601
- US-A- 2 767 152
- US-A- 4 193 902
- CHEMICAL ABSTRACTS, Vol 91, 6th August 1979, page 85, abstract no. 41051q, Columbus, Ohio, US; & JP-A-79 39 447
- J.C.Carl, Il lattice di Neoprene, Elastomer Chem. Depart., E.I. DU PONT DE NEMOURS, 1964
- J.A. Brydson, Rubber Materials and their Compounds, Elsevier Applied Science, London and New York, p. 425, 426

## Description

In order to preserve various products such as food stuffs or beverages it is conventional practice to fill the product into a container body and then to seal the body by a closure, trapping a sealing gasket in the seal between the body and the closure. This sealing gasket is conventionally made by lining the sealing face of the closure with a liquid composition comprising rubbery polymer. and then drying the liquid composition to form a gasket. The sealing face of the closure is compressed around the end of the container thereby sealing the closure to the sealing face with the gasket within the seal. When the container is a bottle this gasket is trapped between the sealing face of the rim of the bottle and the overlying closure. When, as is more usual, the container is a can the gasket is generally trapped in the double seam formed in conventional manner by compressing the outer periphery of the container closure around an outwardly extending flange of the side wall of the can body and then pressing the flange and the closure periphery against the side wall of the can body, generally in a single operation.

The majority of the compositions that are filled into such containers are substantially free of fats and oils. For instance the filling composition may be of fruit or vegetables in an aqueous medium or may be an aqueous beverage. In these circumstances the filling composition will have substantially no effect on the gasket, even upon prolonged storage, and so the sealing composition from which the gasket is made can be formulated having regard primarily to the need to achieve a good initial seal.

Commercially satisfactory sealing compositions are almost always formed of rubbery polymer together with various additives, typically filler and tackifying resin. It is generally accepted that, for good sealing properties, the polymer should dry to form a rubbery and elastic film.

A wide variety of polymers have been proposed in the literature for use in sealing compositions for containers filled with aqueous products such as fruit, vegetables and beverages and many such polymers are described in our British Patent Specifications 2084600 and 2084601.

Despite the large number of polymers that have been proposed in the literature file commercial reality is that styrene butadiene rubbers are invariably used for aqueous filling compositions such as fruit. vegetables and beverages.

A particular problem arises when the filling composition contains a fat or oil, for instance when at least 0.5% by weight of the filling composition is organic fatty or oily material. This liquid organic material may be animal or vegetable oil and the filling compositions may therefore be, for instance, fatty meats, chicken soup or products containing vegetable oils.

Compositions based on styrene butadiene rubber are used with oily and fatty packs but it is difficult to obtain both optimum sealing properties and optimum oil resistance. For instance any modification in the formulation to improve the oil resistance is usually accompanied by a deterioration in the sealing performance. Compositions that are to be used with oily or fatty packs are often judged, for instance by Governmental and other agencies, by an open oil immersion test. A suitable test is the test of the Parma Institute in Italy. In this test, referred to herein as the Parma Open Oil Immersion Test, a stripe of the composition being tested is spread onto a strip of tin plate and then dried for 10 minutes in a hot air oven at 80°C. After two days storage at ambient temperature the tin plate strip is immersed in olive oil at 90°C for 2 hours. The strip is then removed from the oil and the stripe assessed for loss of adhesion, loss of cohesion and softening each on a scale of 0 to 4,0 signifying no deterioration in properties and 4 indicating total loss of properties. Values of 1 may be adequate but O is preferred. It has been difficult to provide a composition that will both pass this open oil immersion test and that will give satisfactory sealing properties.

A liquid composition according to the invention suitable for forming a sealing gasket for a container for a filling composition which is an aqueous latex having total solids content in the range 30 to 80% by weight comprises a styrene acrylic copolymer and tackifier resin in an amount up to 30% by weight of the solids content and is characterised in that the copolymer is a copolymer of styrene, (meth) acrylic ester and non-esterified ethylenically unsaturated carboxylic acid and which copolymer is formed from 30 to 70% by weight styrene, 70 to 30% by weight alkyl (meth) acrylate and 0.5 to 10% by weight of the non-esterified ethylenically unsaturated carboxylic acid chosen from acrylic and methacrylic acid not more than 10% by weight of monomers other than styrene and alkyl (meth) acrylate being included in the polymer.

The invention includes also a container closure carrying a sealing gasket formed from such a composition and sealed containers comprising a container body and a closure that is sealed to the body wherein the closure carries a sealing gasket formed from such a composition.

We have surprisingly found that the gaskets formed from such compositions are particularly effective for containers for filling compositions containing oil or fat and thus the invention includes also sealed containers filled with a filling composition containing fat or oil and comprising a container body, a closure seal to the body and a sealing gasket in the seal between the body and the closure, characterised in that the gasket is formed from such a liquid composition.

It is possible easily to formulate the compositions according to the invention such that when subjected to the Parma Open Oil Immersion Test as described above. the loss of adhesion, loss of cohesion and degree of softening are each O or 1, and preferably are all O.

Styrene acrylic copolymers have been mentioned previously for possible use in certain container gaskets (in British Patent Specifications Nos. 2084600 and 2084601) but only as one of a very large list of exemplified polymers that can be incorporated in sealing compositions and there is no suggestion that any additional monomeric units should be included in the copolymer. The compositions described in those specifications are described as having been tested for sealing with hot liquid nutrients, which will inevitably have been conventional oil free aqueous nutrients. The preferred polymers are said to be styrene butadiene copolymers and, as mentioned above, these are very satisfactory for substantially oil-free aqueous compositions but are less satisfactory for compositions containing oil. Accordingly there is nothing in either of those patents to suggest that it would be possible, for the first time, to achieve both good oil resistance and good sealing properties by using copolymers of styrene and acrylic ester. Also, since it is accepted that it is necessary for the polymers in gasket compositions to be rubbery, styrene acrylic ester copolymers would not generally be regarded as very satisfactory since their rubbery properties are rather poor, a film of such copolymers generally being relatively hard.

Generally at least 50%, and preferably at least 75%, by weight of the polymer in the gasket is provided by styrene acrylic ester copolymer and usually it is preferred that this copolymer provides substantially all the polymer in the gasket.

The copolymers used in the invention are based on styrene and acrylic ester and the carboxylic acid monomers and, optionally, small amounts of other monomers. However it is important that the total amount of monomers other than styrene and acrylic ester should be relatively low, that is below 10%, since higher amounts are likely to detract from the properties of the polymer in the gasket.

The non-esterified, ethylenically unsaturated, carboxylic acid is chosen from acrylic and methacrylic acid and is present in an amount of from 0.5 to 10%. preferably 1 to 5%, by weight of monomeric units. The acid groups may be in the form of free acid or in the form of a salt, for instance with an alkali metal. amine or ammonia.

The (meth) acrylic ester is generally an ester of acrylic acid (or less preferably methacrylic acid) with an alkyl group generally containing 1 to 8 carbon atoms, most preferably 2 to 6 carbon atoms. Mixtures of acrylic esters may be present in the polymer. Preferably the (meth) acrylic ester consists wholly or mainly of butyl acrylate.

The copolymers are formed from 30 to 70% styrene, 1 to 10% methacrylic or, preferably, acrylic acid and 70 to 30% alkyl methacrylate or, preferably, alkyl acrylate. Preferably the amount of styrene is 40 to 60%, the amount of acrylate ester 60 to 40% and the amount of (meth)acrylic acid 1 to 5%, all percentages being by weight. The Mooney viscosity is generally 20 to 200, preferably 35 to 100. The polymer is preferably supplied as a latex.

The gasket is generally made by depositing onto the sealing surface of the can end of other closure a liquid sealing composition and then drying this to form the gasket. The gasket composition, and thus the solids content of the liquid sealing composition, generally contains other components such that the amount of polymer in the compositions is generally from 20 to 60%, most preferably 30 to 50%, by weight of the solids content of the compositions.

The compositions typically contain from 20 to 60%, most preferably 30 to 50%, by weight of a filler. Typical fillers are talc and kaolin but any of the fillers known for use in container sealing compositions, for instance as discussed in British Patent Specification 2084600, may be used.

The compositions include a tackifier resin, for instance in amounts up to 30% by weight, most preferably 5 to 15% by weight, based on the weight of the solids content of the composition Suitable materials are well known and may be selected from, for instance, synthetic hydrocarbon or petroleum resins, polyterpene resins, phenolic resins modified with natural resins such as rosin or terpene, xylene formaldehyde resins and modified products thereof and esterified rosins or other rosin type resins such as rosin, hydrogenated rosin or hardened rosin.

The compositions will generally contain at least one stabiliser for stabilising the liquid sealing composition. The amount of stabiliser is generally from 1 to 10%, preferably 2 to 7%, by weight solids. Any of the stabilisers conventionally used may be used, including styrene maleic anhydride or other styrene copolymers, methyl cellulose, polyacrylamide, ethoxylate condensates, polyvinyl pyrrolidone, ammonium oleate and casein. Mixtures may be used.

The compositions may contain minor amounts, for instance up to 10% by weight solids maximum and generally below 5% and often below 1 % by weight solids, of other additives that are conventional in liquid sealing compositions based on a latex of rubbery copolymer. Such additives include viscosity increasing agents (for instance ammonium alginate, bentonite or gum keraya or high molecular weight polyacrylic acid), bactericides, corrosion inhibitors, surfactants, antioxidants (for instance phenolic or amino antioxidants) and pH adjusters (for instance ammonia, primary amine, sodium hydroxide or sodium carbonate). Volatile additives such as ammonia will be present in the liquid sealing composition but may evaporate during the formation of the gasket by drying.

The total solids content of the liquid sealing composition is from 30 to 80% by weight with the balance generally being water.

The liquid sealing composition may be made simply by blending together the latex of polymer and the other additives under conditions that avoid coagulation of the latex and the formation of a uniform dispersion of the latex, any filler, and other solids ingredient.

The liquid composition may be lined onto the can end or other container closure and dried all in conventional manner. The can, jar or other container body may be filled with the oily filling composition and the closure then applied to the body and affixed to it in conventional manner as discussed above. Preferably the container is a can.

The container is generally completely filled with the filling composition but may be only partly filled. The filling composition generally contains at least 1%, and preferably 2% or more, of an animal or vegetable fat or oil.

To demonstrate the surprising properties of the invention, 6 liquid sealing compositions were prepared from the components identified in Table 1. All amounts are by weight. The amounts of latex are the dry weight of latex.

Latex X is a latex of hot polymerised styrene butadiene rubber having a hound styrene content between 44 and 48% and a Mooney viscosity between 35 and 45. Latex Y is a later of a compound of 2.5% methacrylic acid, 51% styrene, 26.5% butadiene and 20% butyl acrylate and that has a Mooney viscosity of 39. Latex Z is a latex of a copolymer of, by weight, 3% acrylic acid, 47% styrene and 50% butyl acrylate and that has a Mooney viscosity of 58.

The stabiliser in compositions A, B and C gas a styrene maleic anhydride copolymer whilst in compositions D, E, F and G it was casein. The vulcanising system in compositions D, E and F was 0.8% zinc dibutyl dithiocarbamate and 0.2% sulphur. The "other soiid ingredients" are formed of conventional additives such as thickener, antioxidant, antifungicide, carbon black and surfactant.

**TABLE 1**

| | A | B | C | D | E | F | G |
|---|---|---|---|---|---|---|---|
| Latex X | 44.5 | - | - | 38.1 | - | - | - |
| Latex Y | - | 44.5 | - | - | 38.1 | - | - |
| Latex Z | - | - | 44.5 | - | - | 38.1 | 38.1 |
| Hydrocarbon resin | 8.2 | 8.2 | 8.2 | - | - | - | - |
| Zinc resinate | 2.7 | 2.7 | 2.7 | - | - | - | - |
| Methyl ester of hydrogenated resin | - | - | - | 9.7 | 9.7 | 9.7 | 9.7 |
| Kaolin | 35.5 | 35.5 | 35.5 | 31.0 | 31.0 | 31.0 | 31.0 |
| Titanium dioxide | 5.5 | 5.5 | 5.5 | 9.5 | 9.5 | 9.5 | 9.5 |
| Stabiliser | 2.2 | 2.2 | 2.2 | 5.1 | 5.1 | 5.1 | 5.1 |
| Zinc oxide | - | - | - | 0.8 | 0.8 | 0.8 | 0.8 |
| Benzoic acid | - | - | - | 2.5 | 2.5 | 2.5 | 2.5 |
| Vulcanising system | - | - | - | 1.0 | 1.0 | 1.0 | - |
| Other solid ingredients | 1.4 | 1.4 | 1.4 | 2.3 | 2.3 | 2.3 | 2.3 |
| Water | 122.0 | 122.0 | 122.0 | 122.0 | 122.0 | 122.0 | 122.0 |

The sealing performance of these compositions is determined as the biological seal value. To determine this value each composition was lined into can closures (often termed can ends) and dried in conventional manner, the amount of the composition being such as to give the dry film volume generally recommended for the particular size. Cans having a soldered side seam were then filled with a hot liquid nutrient, typically at a temperature of 97°C, leaving a small headspace. In some of the tests the liquid nutrient was free of fat or oil but in others 2% vegetable oil was added to the nutrient immediately before filling so as to give a layer of oil on the surface at the time of closing, thus simulating a typical oily pack.

These test closures were then double seamed onto the filled cans, sometimes with steam injection into the headspace whilst fitting the closures, and sometimes without steam injection. The closed cans were then sterilised, typically at 320°C for 20 minutes, and after sterilisation were immediately cooled in water containing gas-producing, non-pathogenic micro-organisms capable of growth in the aforementioned nutrient. After cooling and whilst still wet with the cooling water, the cans were subjected to a controlled deformation at the junction of the side seam and the double seam of the test closure. After incubation for six days at an elevated temperature optimum for the growth of the micro-organism, followed by one day at ambient temperature, the cans were examined visually and the number of swollen cans recorded. The retained vacuum in the remaining cans was measured. Cans having a low retained vacuum and the swollen cans are considered to have reached this condition through failure of the seal in the test closure. The swollen and low vacuum cans are termed failures and the "biological seal" value is the failure rate expressed as the number of such cans per thousand tested.

Because of the procedures used the number of failed cans per thousand in this biological seal test is of course very much greater than that which would occur with commercially packed cans sealed with these compositions.

The results of one series of tests are given in Table 2, standard pack results being for the aqueous nutrient and oily pack being for the aqueous nutrient with added oil. The results of another series of tests, conducted at a different time and using separately prepared compositions as shown in Table 1, are given in Table 3.

**TABLE 2**

| | BIOLOGICAL SEAL PERFORMANCE | | |
|---|---|---|---|
| | With Steam Injection | | Without Steam Injection |
| | Standard Pack | Oily Pack | Standard Pack |
| A | 575 | 720 | 400 |
| B | 540 | 625 | 495 |
| C | 500 | 610 | 245 |

| | Without Steam Injection | | |
|---|---|---|---|
| | Standard Pack | | Oily Pack |
| D | 190 | | 555 |
| E | 150 | | 250 |
| F | 70 | | 125 |

**TABLE 3**

| BIOLOGICAL SEAL PERFORMANCE | | | | |
|---|---|---|---|---|
| | With Steam Injection | | Without Steam Injection | |
| | Standard Pack | Oily Pack | Standard Pack | Oily Pack |
| A | 250 | 525 | 110 | 390 |
| D | 145 | 535 | 300 | 375 |
| F | 35 | 235 | 60 | 50 |
| G | 50 | 265 | 165 | 60 |

It is apparent that the sealing properties of the carboxylated styrene acrylic latex-based compositions C, F and G are as good as those of styrene butadiene rubber both for aqueous fillings and for oily fillings and, in the absence of steam injection, are much better for both aqueous and oily fillings. It is also apparent that the vulcanising system in composition F is not essential to obtaining good results.

The compositions were tested for oil resistance by the described method and the results are shown in Table 4.

**TABLE 4**

| OIL RESISTANCE | | | |
|---|---|---|---|
| | Loss of Adhesion | Loss of Cohesion | Degree of Softening |
| A | 3 | 3 | 3 |
| B | 2 | 2 | 2 |
| C | 0 | 0 | 0 |
| D | 2 | 2 | 2 |
| E | 1 | 1 | 1 |
| F | 0 | 0 | 0 |
| G | 0 | 0 | 0 |

This table clearly demonstrates that the compositions C, F and G containing the styrene/butyl acrylate/acrylic acid copolymer have excellent resistance in this oil immersion test and show no loss of adhesion or cohesion and no softening compared to the compositions containing the other copolymers.

## Claims

1. A liquid composition suitable for forming a sealing gasket for a container for a filling composition which is an aqueous latex having total solids content in the range 30 to 80% by weight comprising a styrene acrylic copolymer and tackifier resin in an amount up to 30% by weight of the solids content characterised in that the said copolymer is a copolymer of styrene, (meth) acrylic ester and non-esterified ethylenically unsaturated carboxylic acid and which copolymer is formed from 30 to 70% by weight styrene, 70 to 30% by weight alkyl (meth) acrylate and 0.5 to 10% by weight of the non-esterified ethylenically unsaturated carboxylic acid chosen from acrylic and methacrylic acid, no more than 10% by weight of monomers other than styrene and alkyl(meth)acrylate being included in the polymer.

2. A composition according to claim 1 in which the said copolymer is formed from 40 to 60% by weight styrene, 60 to 40% by weight alkyl (meth) acrylate and 1 to 5% by weight of the non-esterified ethylenically unsaturated carboxylic acid.

3. A composition according to claim 1 or 2 in which the polymer has a Mooney viscosity of 20 to 200.

4. A composition according to any preceding claim containing, by weight solids, 20 to 60% of the said polymer, 20 to 60% filler, and 1 to 10% stabiliser.

5. A composition according to any preceding claim which contains 5 to 15% by weight tackifier resin based on the total solids weight.

6. A container closure carrying a sealing gasket formed from a composition according to any of claims 1 to 5.

7. A sealed container comprising a container body and a closure that is sealed to the body and that carries a sealing gasket, characterised in that the gasket is formed from a composition according to any of claims 1 to 5.

8. Use of a composition according to any of claims 1 to 5 for forming a sealing gasket for a container for a filling composition containing oil or fat.

9. A sealed container filled with a filling composition containing fat or oil and comprising a container body, a closure sealed to the body and a sealing gasket in the seal between the body and the closure, characterised in that the sealing gasket is formed from a liquid composition according to any of claims 1 to 5.

## Patentansprüche

1. Flüssige Zusammensetzung, die zur Bildung einer Dichtung für einen Behälter für eine Füllzusammensetzung geeignet ist und ein wäßriger Latex mit einem Gesamtfeststoffgehalt im Bereich von 30 bis 80 Gew.% ist, der ein styrol-Acryl-Copolymer und Klebrigmacherharz in einer Menge von bis zu 30 Gew.% des Feststoffgehalts umfaßt, dadurch gekennzeichnet, daß das Copolymer ein Copolymer aus Styrol, (Meth)acrylester und nicht veresterter, ethylenisch ungesättigter Carbonsäure ist, wobei das Copolymer aus mindestens 30 Gew.% Styrol, 70 bis 30 Gew.% Alkyl(meth)acrylat und 0,5 bis 10 Gew.% der nicht veresterten, ethylenisch ungesättigten Carbonsäure, ausgewählt aus Acryl- und Methacrylsäure, gebildet ist und nicht mehr als 10 Gew.% von Styrol und Alkyl(meth)acrylat verschiedene Monomere in dem Polymer eingeschlossen sind.

2. Zusammensetzung nach Anspruch 1, bei der das Copolymer aus 40 bis 60 Gew.% Styrol, 60 bis 40 Gew.% Alkyl(meth)acrylat und 1 bis 5 Gew.% der nicht veresterten, ethylenisch ungesättigten Carbonsäure gebildet ist.

3. Zusammensetzung nach Anspruch 1 oder 2, bei der das Polymer eine Mooney-Viskosität von 20 bis 200 aufweist.

4. Zusammensetzung nach einem der vorhergehenden Ansprüche, die bezogen auf den Feststoffgehalt 20 bis 60 % des Polymers, 20 bis 60 % Füllstoff und 1 bis 10 % Stabilisator enthält.

5. Zusammensetzung nach einem der vorhergehenden Ansprüche, die bezogen auf den Gesamtfeststoffgehalt 5 bis 15 Gew.% Klebrigmacherharz enthält.

6. Behälterverschluß, der eine Dichtung aufweist, die aus einer Zusammensetzung gemäß einem der Ansprüche 1 bis 5 gebildet ist.

7. Verschlossener Behälter, der einen Behälterkörper und einen Verschluß umfaßt, mit dem der Körper verschlossen ist, und der eine Dichtung aufweist, dadurch gekennzeichnet, daß die Dichtung aus einer Zusammensetzung gemäß einem der Ansprüche 1 bis 5 gebildet ist.

8. Verwendung einer Zusammensetzung gemäß einem der Ansprüche 1 bis 5 zur Bildung einer Dichtung für einen Behälter für eine Öl oder Fett enthaltende Füllzusammensetzung.

9. Verschlossener Behälter, der mit einer Öl oder Fett enthaltenden Füllzusammensetzung gefüllt ist und einen Behälterkörper, einen den Körper verschließenden Verschluß und eine Dichtung in der Fuge zwischen dem Körper und dem Verschluß umfaßt, dadurch gekennzeichnet, daß die Dichtung aus einer flüssigen Zusammensetzung gemäß einem der Ansprüche 1 bis 5 gebildet ist.

## Revendications

1. Composition liquide appropriée à la formation d'une garniture d'étanchéification pour un conteneur pour une composition de remplissage qui est un latex aqueux ayant une teneur totale en solides de 30 à 80% en poids, comprenant un copolymère acrylique de styrène et une résine d'adhésivité, en une quantité allant jusqu'à 30% en poids de la teneur en solides, caractérisée en ce que ledit copolymère est un copolymère de styrène, d'ester (meth) acrylique et d'un acide carboxylique non estérifié à insaturation éthylénique, lequel copolymère est formé de 30% à 70% en poids de styrène, de 70 à 30% en poids de meth (acrylate) d'alkyle et de 0,5 à 10% en poids de l'acide carboxylique non estérifié à insaturation éthylénique choisi parmi l'acide acrylique et méthacrylique, pas plus de 10% en poids des monomères autres que le styrène et le (meth) acrylate d'alkyle étant incorporé dans le polymère.

2. Composition selon la revendication 1, où ledit copolymère est formé de 40 à 60% en poids de styrène, de 60 à 40% en poids de (meth) acrylate d'alkyle et de 1 à 5% en poids de l'acide carboxylique non estérifié à insaturation éthylénique.

3. Composition selon la revendication 1 ou 2, où le polymère a une viscosité Mooney de 20 à 200.

4. Composition selon l'une des revendications précédentes contenant, en poids de solides, 20 à 60% dudit polymère, 20 à 60% de charge et 1 à 10% d'un stabilisant.

5. Composition selon l'une des revendications précédentes qui contient de 5 à 15% en poids de résine d'adhésivité sur la base du poids total des solides.

6. Fermeture de conteneur portant une garniture d'étanchéité formée d'une composition selon l'une quelconque des revendications 1 à 5.

7. Conteneur scellé comprenant un corps de conteneur et une fermeture qui est scellée au corps et qui porte une garniture d'étanchéité, caractérisé en ce que la garniture est formée d'une composition selon l'une quelconque des revendications 1 à 5.

8. Utilisation d'une composition selon l'une quelconque des revendications 1 à 5 pour former une garniture d'étanchéité pour un conteneur pour une composition de remplissage contenant de l'huile ou une matière grasse.

9. Conteneur scellé rempli d'une composition de remplissage contenant de l'huile ou une matière grasse et comprenant un corps de conteneur, une fermeture scellée au corps et une garniture d'étanchéité dans le joint entre le corps et la fermeture, caractérisé en ce que la garniture d'étanchéité est formée d'une composition selon l'une quelconque des revendications 1 à 5.
